# EUROPÄISCHE PATENTSCHRIFT

(11) **EP 1 581 408 B1**
(45) Veröffentlichungstag und Bekanntmachung des Hinweises auf die Patenterteilung: **04.11.2009**
(21) Anmeldenummer: 03799450.6
(22) Anmeldetag: 22.12.2003
(51) Int. Cl.: B60N 2/02

(54) **KRAFTFAHRZEUGSITZ UND KRAFTFAHRZEUGSITZBANK**
MOTOR VEHICLE SEAT AND MOTOR VEHICLE SEAT BENCH
SIEGE DE VEHICULE AUTOMOBILE ET BANQUETTE DE SIEGE DE VEHICULE AUTOMOBILE

(30) Priorität: 31.12.2002 DE 10261689
(43) Veröffentlichungstag der Anmeldung: 05.10.2005
(73) Patentinhaber: Brose Fahrzeugteile GmbH & Co. KG, Coburg, 96450 Coburg (DE)
(72) Erfinder: FISCHER, Matthias, 98317 Kronach (DE); HOFMANN, Jochen, 96257 Marktgraitz (DE)
(74) Vertreter: Baumgärtel, Gunnar
(86) Internationale Anmeldenummer: PCT/DE2003/004275
(87) Internationale Veröffentlichungsnummer: WO 2004/060712

(56) Entgegenhaltungen:
- EP-A- 0 518 130
- FR-A- 2 707 934
- US-A- 3 540 777
- US-A- 4 368 916
- US-A- 5 692 802
- PATENT ABSTRACTS OF JAPAN Bd. 1995, Nr. 04, 31. Mai 1995 (1995-05-31) & JP 7 025274 A (MAZDA MOTOR CORP), 27. Januar 1995 (1995-01-27)

## Beschreibung

Der Erfindung geht aus von einem Kraftfahrzeugsitz der aus der EP 0 518 130 A1 bekannten Art und ihr liegt die Aufgabe zugrunde, einen verbesserten Kraftfahrzeugsitz bzw. eine verbesserte Kraftfahrzeugsitzbank mit einer einstellbaren Rückenlehne anzugeben; der Kraftfahrzeugsitz bzw. die Kraftfahrzeugsitzbank soll einerseits einen sehr großen Benutzungs- und Bedienkomfort und andererseits gleichzeitig ein sehr hohes Maß an Sicherheit für den oder die Fahrzeuginsassen bieten.

Diese Aufgabe wird erfindungsgemäß gelöst durch einen Kraftfahrzeugsitz bzw. eine Kraftfahrzeugsitzbank mit den Merkmalen gemäß dem Patentanspruch 1. Vorteilhafte Ausgestaltungen des erfindungsgemäßen Kraftfahrzeugsitzes bzw. der erfindungsgemäßen Kraftfahrzeugsitzbank sind in Unteransprüchen angegeben. Unter der Sitzlängsrichtung wird dabei die Richtung verstanden, entlang der sich das Sitzuntergestell erstreckt bzw. in der sich die Rückenlehne verschieben lässt; i. a. ist dies die Fahrzeuglängsrichtung.

Ein wesentlicher Vorteil des erfindungsgemäßen Kraftfahrzeugsitzes bzw. der erfindungsgemäßen Kraftfahrzeugsitzbank besteht darin, dass die Sitztiefe des Sitzes an die individuellen Bedürfnisse des bzw. der Fahrzeuginsassen angepasst werden kann. So kann die Rückenlehne - in Sitzlängsrichtung gesehen - nach hinten geklappt werden, wodurch die Sitztiefe und damit der Sitzkomfort vergrößert wird. Stattdessen kann aber auch zusätzlicher Stauraum hinter dem entsprechenden Fahrzeugsitz bzw. der Fahrzeugsitzbank - nachfolgend wird kurz nur noch von einem Fahrzeugsitz stellvertretend für einen Fahrzeugsitz und/oder eine Fahrzeugsitzbank die Rede sein - geschaffen werden, indem die Rückenlehne in Sitzlängsrichtung betrachtet nach vorne geschoben wird. Zusätzlicher Stauraum hinter der Rückenlehne des Fahrzeugsitzes kann beispielsweise im Falle von im Fond angeordneten Fahrzeugsitzen von Vorteil sein, wenn die Größe des Kofferraumes vergrößert werden soll. Handelt es sich hingegen um im vorderen Bereich des Kraftfahrzeugs angeordnete Fahrzeugsitze, so kann durch ein Verschieben der Rückenlehne nach vorne zusätzlicher Raum bzw. zusätzliche Beinfreiheit für die im Fond - also die dahinter sitzenden - Fahrzeuginsassen geschaffen werden.

Ein weiterer wesentlicher Vorteil der Erfindung ist darin zu sehen, dass die Sicherheit des bzw. der Fahrzeuginsassen durch die verschiebbar angebrachte Rückenlehne nicht in Frage gestellt oder verschlechtert wird, weil nämlich erfindungsgemäß eine Verriegelungseinrichtung vorgesehen ist, die die Rückenlehne in ihrer jeweiligen Endlage - also nach hinten oder nach vorne geschoben - verriegelt, so dass die Rückenlehne in ihrer jeweiligen "Benutzungsposition" fest arretiert ist.

Ein dritter wesentlicher Vorteil der Erfindung ist darin zu sehen, dass die Verriegelungseinrichtung "automatisch" arbeitet und die Rückenlehne selbsttätig arretiert, sobald eine Endposition bzw. Arretierposition erreicht ist; eine manuell gesteuerte Verriegelung, die vom Fahrzeuginsassen womöglich vergessen und somit nicht durchgeführt wird, ist bei dem erfindungsgemäßen Kraftfahrzeugsitz somit nicht vorhanden, wodurch ein besonders hohes Maß an Betriebssicherheit erreicht wird.

Gemäß einer vorteilhaften Ausgestaltung der Erfindung ist vorgesehen, dass die Verschiebeeinrichtung eine Hebelanordnung aufweist, mittels derer sich die Rückenlehne bezüglich des Sitzuntergestells verschieben lässt. Mit einer Hebelanordnung lässt sich die Verschiebeeinrichtung für die Rückenlehne nämlich besonders einfach realisieren.

Besonders einfach und damit vorteilhaft wird die Hebelanordnung durch zwei voneinander beabstandete Verstellhebel gebildet, die einerseits jeweils an der Rückenlehne und andererseits jeweils an dem Sitzuntergestell angelenkt bzw. mit diesem gelenkig verbunden sind. Besonders vorteilhaft verlaufen die beiden Verstellhebel - im wesentlichen - parallel zueinander und sind gleich lang. Die Neigung der Rückenlehne bleibt bei einer solchen Parallelkinematik stets unverändert.

Anstelle einer Parallelkinematik kann auch eine andere Kinematik vorgesehen sein; so können die Verstellhebel derart bemessen und angeordnet sein, dass die Rückenlehne im "nach vorne geschobenen Zustand" eine steilere Position einnimmt als im "nach hinten geschobenen Zustand". Beispielsweise lässt sich dies erreichen, wenn die Verstellhebel unterschiedlich lang sind, insbesondere wenn der - in Sitzlängsrichtung gesehen - hintere Verstellhebel länger ist als der vordere Verstellhebel. Der Vorteil einer steileren Position der Rückenlehne im nach vorne geschobenen Zustand ist darin zu sehen, dass hinter der Rückenlehne ein größerer Stauraum geschaffen wird als im Falle einer weniger steilen Position der Rückenlehne. Dies ist beispielsweise von Vorteil, wenn die Rückenlehne an den Kofferraum angrenzt, weil dann der Kofferraum zusätzlich vergrößert wird.

Im Hinblick auf eine möglichst große Sicherheit der Fahrzeuginsassen im Kraftfahrzeug ist es erforderlich, dass sich die Rückenlehne auch im Falle eines Fahrzeugunfalls (Fahrzeugcrash) nicht bewegen kann. Um dies sicherzustellen, muss die Verriegelungseinrichtung derart ausgestaltet sein, dass sie sich auch bei den im Falle eines Fahrzeugunfalls auftretenden Kräften (Beschleunigungskräften, Stößen, Schwingungen) nicht selbsttätig entriegeln kann. Dies wird besonders einfach erreicht, indem die Verriegelungseinrichtung ein Verriegelungselement aufweist, das derart angeordnet und ausgestaltet ist, dass es zum Überführen der Verriegelungseinrichtung von dem verriegelten Zustand in den entriegelten Zustand translatorisch und rotatorisch bewegt werden muss. Durch die Kombination einer translatorischen und einer rotatorischen Bewegung zum Entriegeln des Verriegelungselements wird nämlich auch bei sehr hohen Kräften - wie sie bei Fahrzeugunfällen auftreten - ein unerwünschtes selbsttätiges Entriegeln des Verriegelungselements zuverlässig vermieden.

Eine besonders sichere Verriegelung des Verriegelungselements wird vorteilhaft dadurch erreicht, dass das Verriegelungselement zum Entriegeln zunächst translatorisch und erst anschließend rotatorisch bewegt werden muss. Dabei wird durch die translatorische Bewegung, die eine erste Phase der Entriegelung des Verriegelungselements darstellt, das Verriegelungselement in eine Zwischenposition gebracht, in der dann erst eine rotatorische Bewegung des Verriegelungselements - im Rahmen einer zweiten Phase des Entriegelungsvorgangs - möglich wird. Mit anderen Worten ist eine rotatorische Bewegung des Verriegelungselements nicht möglich, solange noch nicht die translatorische Entriegelungsbewegung vorab erfolgt ist.

Die zum Entriegeln und Verriegeln des Verriegelungselements erforderlichen Bewegungsabläufe lassen sich in vielfältiger Weise vorgeben bzw. gewährleisten; besonders einfach und damit vorteilhaft lässt sich der zum Entriegeln und Verriegeln erforderliche Bewegungsablauf jedoch festlegen, wenn das Verriegelungselement zumindest eine Führungskulisse aufweist. Durch eine Führungskulisse lassen sich nämlich quasi beliebige Bewegungsabläufe in sehr einfacher Weise festlegen.

Die translatorische Bewegung des Verriegelungselements lässt sich beispielsweise erzwingen, wenn zumindest zwei beabstandete Hilfsbolzen jeweils in eine Führungskulisse des Verriegelungselements eingreifen. Dabei können die mindestens zwei Hilfsbolzen fest an der Rückenlehne befestigt sein. '

Ein besonders hohes Maß an Sicherheit für die Fahrzeuginsassen wird weiterhin erreicht, indem undefinierte "Zwischenzustände" des Verriegelungselements zwischen dem "verriegelten" und dem "entriegelten" Zustand unterbunden werden. Derartige undefinierte Zwischenzustände lassen sich besonders einfach durch ein Überführungselement vermeiden, das derartige Zwischenzustände des Verriegelungselements unterbindet. Ein solches Überführungselement kann beispielsweise zumindest ein elastisches Element, beispielsweise eine Feder, aufweisen.

Vorteilhaft lässt sich ein Überführungselement mit Hilfe zweier Federn bilden, von denen die eine das Verriegelungselement im verriegelten Zustand und die andere Feder das Verriegelungselement im entriegelten Zustand elastisch hält bzw. fixiert. Mit zwei Federn lassen sich sowohl der entriegelte Zustand als auch der verriegelte Zustand jeweils in sehr einfacher Weise "fixieren". Die Arretierung bzw. Verriegelung der Rückenlehne in der jeweiligen Arretier- bzw. Endposition wird vorteilhaft erreicht, wenn das Verriegelungselement eine Rastnase aufweist, die im verriegelten Zustand an dem jeweils zugeordneten, am Sitzuntergestell angeordneten Arretierbolzen anliegt.

Gemäß der Erfindung ist vorgesehen, dass das Verriegelungselement einen Auslöseanschlag, beispielsweise eine Auslösenase, aufweist, der derart an dem Verriegelungselement angeordnet ist, dass er an einem am Sitzuntergestell angeordneten Anschlag anschlägt und eine Rotationsbewegung des Verriegelungselements auslöst, sobald sich die Rückenlehne an eine der beiden Arretierpositionen annähert. Nach Abschluss der Rotationsbewegung überführt das Überführungselement das Verriegelungselement dann vom entriegelten Zustand in den verriegelten Zustand. Bei einer solchen Ausgestaltung des erfindungsgemäßen Kraftfahrzeugsitzes wird in besonders einfacher Weise die selbsttätige bzw. automatische Verriegelung der Rückenlehne in der jeweiligen Arretier-bzw. Endposition erreicht, ohne dass es der Mitwirkung eines Fahrzeuginsassen bedarf.

Besonders einfach und damit vorteilhaft lässt sich die Verriegelungseinrichtung entriegeln, wenn sie eine Betätigungseinrichtung aufweist, durch die das Verriegelungselement vom verriegelten Zustand in den entriegelten Zustand überführbar ist. Eine solche Betätigungseinrichtung kann einen Bolzen aufweisen, der in eine Führungskulisse des Verriegelungselements eingreift.

Der Bolzen der Betätigungseinrichtung kann dabei vorteilhaft an einem Ende eines Steuerarms befestigt sein, dessen anderes Ende an einer an der Rückenlehne angeordneten Drehachse drehbar befestigt ist.

Stattdessen kann der Bolzen der Betätigungseinrichtung aber auch in eine mit der Rückenlehne starr verbundene Kulisse eingreifen, wodurch die Auslenkbarkeit und die Betätigbarkeit des Bolzens der Betätigungseinrichtung definiert wird. In einem solchen Fall kann auf einen Steuerarm verzichtet werden.

Die Betätigungseinrichtung kann besonders einfach durch ein Seil, insbesondere einen Bowdenzug ansteuerbar bzw. betätigbar sein.

Die Betätigung der Betätigungseinrichtung kann dabei über einen manuellen Antrieb manuell oder über einen Motorantrieb motorisch erfolgen.

Im Übrigen wird es als vorteilhaft angesehen, wenn die Rückenlehne schwenkbar gelagert ist. Durch eine schwenkbare Lagerung der Rückenlehne lässt sich diese beispielsweise umklappen, wodurch weiterer Stauraum geschaffen werden kann, wenn der jeweilige Fahrzeugsitz nicht von einem Fahrzeuginsassen genutzt werden soll.

Die Rückenlehne kann dabei schwenkbar am Sitzuntergestell befestigt sein.

Im Übrigen wird es als vorteilhaft angesehen, wenn die Sitzfläche durch ein auf dem Sitzuntergestell angeordnetes Sitzpolster gebildet wird, da bei Vorhandensein eines Sitzpolsters ein besonders großer Sitzkomfort bei der Benutzung des Fahrzeugsitzes erreicht wird.

Zur Erläuterung der Erfindung zeigen:
- Fig. 1: ein Ausführungsbeispiel für einen erfindungsgemäßen Kraftfahrzeugsitz,
- Fig. 2 bis 5: ein erstes Ausführungsbeispiel für eine Verriegelungseinrichtung für den Kraftfahrzeugsitz gemäß der Figur 1, wobei die Figuren 2 bis 5 jeweils unterschiedliche Phasen der Verschiebung der Rückenlehne zeigen, und
- Fig. 6 bis 10: ein zweites Ausführungsbeispiel für eine Verriegelungseinrichtung für den Kraftfahrzeugsitz gemäß der Figur 1, wobei die Figuren 6 bis 10 jeweils unterschiedliche Phasen der Verschiebung der Rückenlehne zeigen.

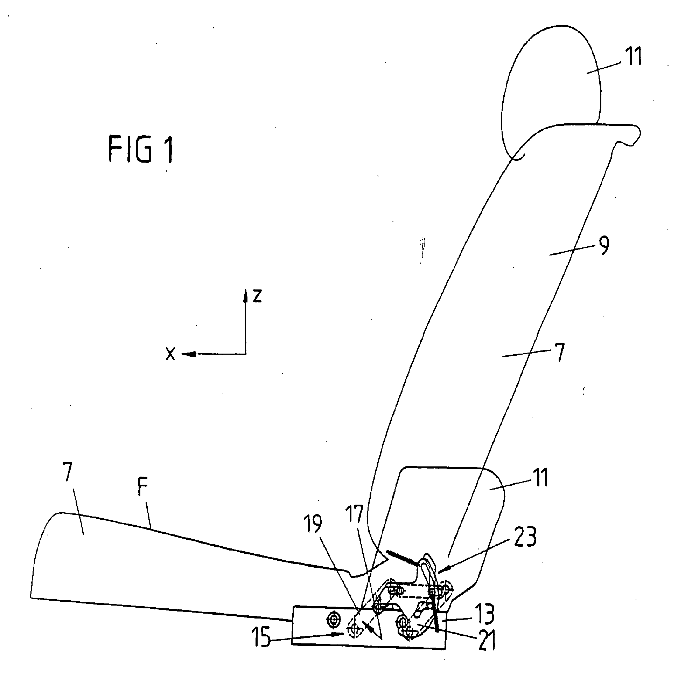

Die Figur 1 zeigt ein Ausführungsbeispiel für einen erfindungsgemäßen Kraftfahrzeugsitz oder eine Kraftfahrzeugsitzbank in einer Gesamtdarstellung im Querschnitt. Der Kraftfahrzeugsitz weist ein in der Figur 1 nicht näher dargestelltes Sitzuntergestell auf, auf dem ein Sitzpolster 6 angebracht ist. Die Oberfläche des Sitzpolsters 6 bildet eine Sitzfläche F, auf der ein Fahrzeuginsasse sitzen kann. Die Sitzfläche F erstreckt sich dabei entlang einer Sitzlängsrichtung L. Ist der Kraftfahrzeugsitz in Fahrtrichtung orientiert, so entspricht die Sitzlängsrichtung L der Fahrtrichtung des Kraftfahrzeugs. Die Fahrzeugachsen X und Z sind in der Figur 1 der Übersichtlichkeit halber ebenfalls dargestellt. Dabei bezeichnet die X-Achse die Fahrzeuglängsachse in Fahrtrichtung nach vorn und die Z-Achse die dazu vertikal nach oben (in Richtung zum Fahrzeugdach) stehende Achse.

Der Kraftfahrzeugsitz weist darüber hinaus eine Rückenlehne 7 auf, an der ein Rückenpolster 9 angebracht ist. An der Rückenlehne 7 ist darüber hinaus eine Kopfstütze 10 befestigt.

Zu der Rückenlehne 7 gehört eine Befestigungsplatte 11, mit der die Rückenlehne 7 am Sitzuntergestell, und zwar an einem Befestigungsträger 13 des Sitzuntergestells befestigt ist. Die Befestigung der Befestigungsplatte 11 der Rückenlehne 7 an dem Befestigungsträger 13 des Sitzuntergestells erfolgt dabei über eine Verschiebeeinrichtung 15, die durch eine Hebelanordnung 17 gebildet ist. Die Hebelanordnung 17 besteht aus zwei beabstandet zueinander angeordnete Verstellhebel 19 und 21, die einerseits jeweils an der Rückenlehne 7 bzw. an der Befestigungsplatte 11 der Rückenlehne 7 und andererseits jeweils an dem Befestigungsträger 13 des Sitzuntergestells drehbar befestigt sind.

Durch die Hebelanordnung 17 bzw. durch die zwei Verstellhebel 19 und 21 kann die Rückenlehne 7 nach vorne und nach hinten verschoben werden. Dieses Verschieben der Rückenlehne 7 sowie die Wirkungsweise der Verriegelungseinrichtung 23 sind in den weiteren Figuren im Detail erläutert.

Im Übrigen ist in der Figur 1 eine Verriegelungseinrichtung 23 gezeigt, die die jeweilige Endposition der Rückenlehne 7 fixiert bzw. verriegelt. Ist die Verriegelungseinrichtung 23 eingerastet, so kann sich die Rückenlehne 7 nicht bewegen, sofern sie nicht durch einen gewollten Eingriff entriegelt wird.

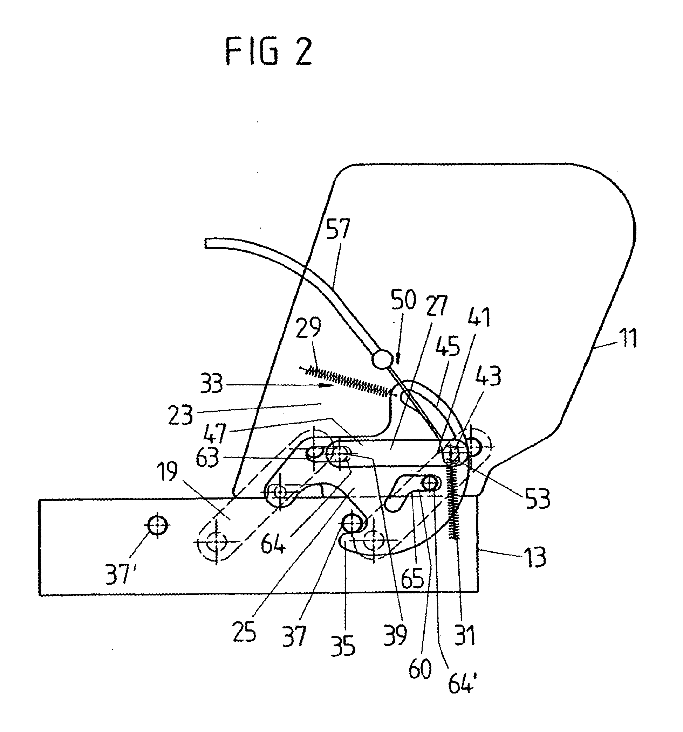

In den Figuren 2 bis 5 ist nun ein erstes Ausführungsbeispiel für eine Verschiebeeinrichtung 15 und eine Verriegelungseinrichtung 23 im Detail gezeigt. So erkennt man bezüglich der Verschiebeeinrichtung 15 die durch die beiden Verstellhebel 19 und 21 gebildete Hebelanordnung 17, mit der sich die Rückenlehne 7 relativ zu dem Befestigungsträger 13 des Sitzuntergestells verschieben lässt.

Außerdem erkennt man die Verriegelungseinrichtung 23, die ein Verriegelungselement 25, einen Steuerarm 27 und ein durch zwei Federn 29 und 31 gebildetes Überführungselement 33 aufweist.

Die Funktionsweise der Verriegelungseinrichtung 23 soll nun im Detail erläutert werden:
In der Figur 2 befindet sich die Rückenlehne 7 und damit die Befestigungsplatte 11 der Rückenlehne 7 in ihrer in Fahrtrichtung gesehen hinteren Position. Eine Rastnase 35 des Verriegelungselements 25 liegt an einem Arretierbolzen 37 des Befestigungsträgers 13 des Sitzuntergestells derart an, dass die Rückenlehne 7 nicht bewegt werden kann. Die Rastnase 35 und die beiden Arretierbolzen 37 und 37' bilden damit "primäre Verriegelungselemente", die die Rückenlehne in der jeweiligen Endlage fixieren.

Zusätzlich zu diesen "primären Verriegelungselementen" sind "sekundäre Verriegelungselemente" vorhanden, die dazu dienen, die Position der Verriegelungseinrichtung 23 bzw. die Position des Verriegelungselements 25 zu fixieren und zu verriegeln. Die "sekundären Verriegelungselemente" werden unter anderem durch den Steuerarm 27 sowie durch weitere, weiter unten erläuterte Elemente gebildet; aufgrund dieser "sekundären Verriegelungselemente" kann das Verriegelungselement 25 aus der in der Figur 2 dargestellten verriegelten Position bzw. dem verriegelten Zustand nicht ohne weiteres in einen entriegelten Zustand überführt werden: Unabhängig davon, von welcher Richtung Kräfte auf die Rückenlehne 7 bzw. die Befestigungsplatte 11 einwirken, bleibt das Verriegelungselement 25 verriegelt, weil es sich nicht bewegen kann. So wird nämlich der Steuerarm 27 in seiner in der Figur 2 dargestellten horizontalen Lage aufgrund der Formgebung der Führungskulisse 45 und aufgrund der Federkraft der Feder 31 gehalten, so dass in Fahrzeuglängsrichtung bzw. in X-Richtung auf die Rückenlehne 7 wirkende Kräfte keine Bewegung des Verriegelungselements 25 hervorrufen können. Auch ein Auslenken bzw. eine Rotationsbewegung des Steuerarms 27 um seine Drehachse 39 wird durch die Feder 31 zuverlässig verhindert.

Zum Entriegeln der Verriegelungseinrichtung 23 ist der Steuerarm 27 mit seinem einen Ende 41 mit einem Bolzen 43 verbunden, der in eine erste Führungskulisse 45 des Verriegelungselements 25 eingreift. Das andere Ende 47 des Steuerarms 27 steht mit der Drehachse 39 in drehbarer Verbindung. Der Bolzen 43 ist dabei Teil einer Betätigungseinrichtung 50 , der Verriegelungseinrichtung 23; durch diese Betätigungseinrichtung 50 kann das Verriegelungselement 25 von dem in der Figur 2 dargestellten verriegelten Zustand in den entriegelten Zustand überführt werden.

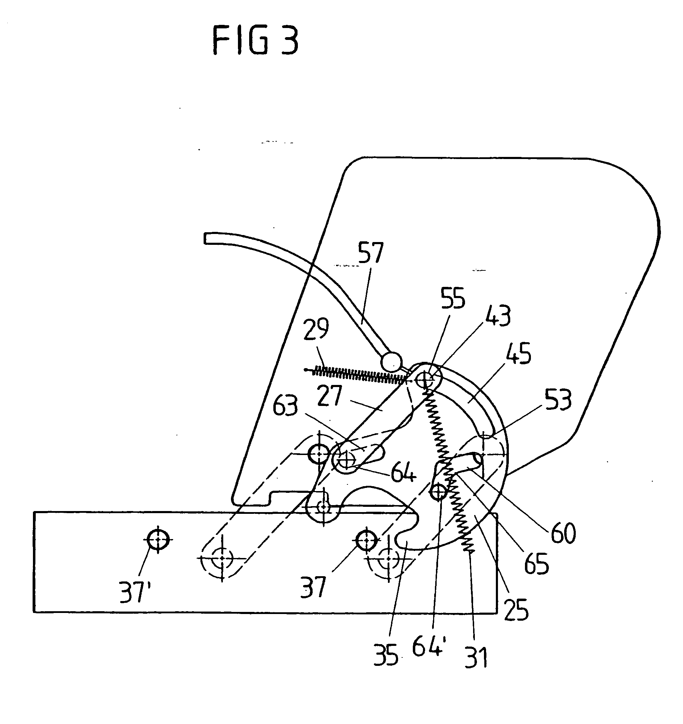

Diese Überführung des Verriegelungselements 25 vom verriegelten Zustand in den entriegelten Zustand lässt sich in der Figur 3 gut erkennen. So sieht man in der Figur 3 den Bolzen 43, der von dem unteren Ende 53 der Führungskulisse 45 in das obere Ende 55 der Führungskulisse 45 durch den Bowdenzug 57 überführt worden ist. Statt eines Bowdenzuges 57 kann beispielsweise auch ein einfaches Seil oder ein sonstiger Antrieb zum Auslenken des Bolzens 43 verwendet werden.

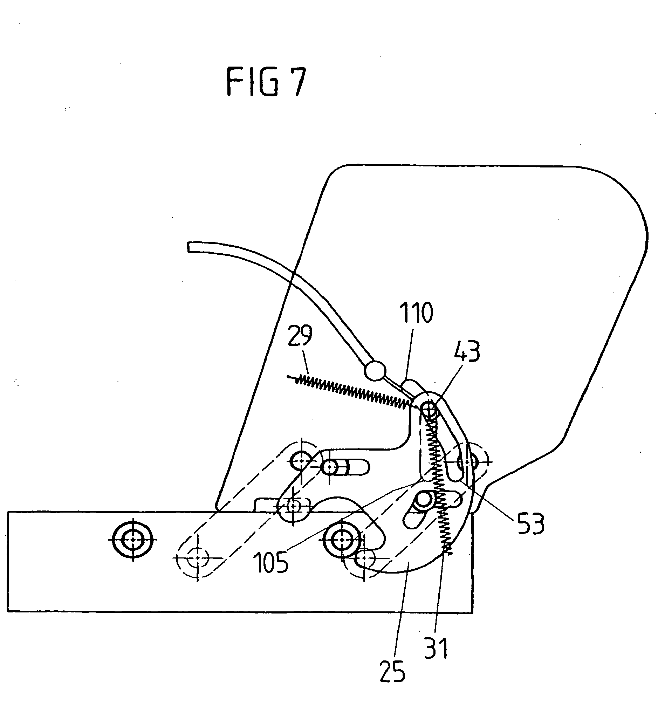

Während der Überführung des Bolzens 43 von dem unteren Ende 53 der Führungskulisse 45 zu dem oberen Ende 55 der Führungskulisse 45 kommt es zunächst zu einer translatorischen Bewegung des Verriegelungselements 25 aufgrund der Ausgestaltung einer zweiten Führungskulisse 60 und einer dritten, als Langloch ausgebildeten Führungskulisse 63, in die jeweils ein an der Befestigungsplatte 11 befestigter Hilfsbolzen 64 und 64' eingreift. Ausgehend von der verriegelten Position des Verriegelungselements 25 gemäß der Figur 2 wird nämlich bei einem Auslenken des Bolzens 43 bzw. des Steuerarms 27 zunächst eine translatorische Bewegung des Verriegelungselements 25 entgegen der Fahrzeug-X-Richtung erzwungen. Konkret wird das Verriegelungselement 25 entgegen der Fahrtrichtung bzw. entgegen der Sitzlängsrichtung L bewegt (vgl. Fig. 7). Die Figur 7 bezieht sich zwar auf das zweite Ausführungsbeispiel, sie ist jedoch im Hinblick auf die translatorische Bewegung auch für das erste Ausführungsbeispiel charakteristisch, so dass hier auch auf die Figur 7 Bezug genommen werden kann.

Die translatorische Bewegung des Verriegelungselements 25 erfolgt während einer ersten Phase der Entriegelung (vgl. Fig. 7). An diese erste Phase der Entriegelung schließt sich eine zweite Phase der Entriegelung an, während der das Verriegelungselement 25 rotatorisch bewegt wird (vgl. Fig. 3). Bei dieser rotatorischen Bewegung des Verriegelungselements 25 bewegt sich dieses um die durch den Hilfsbolzen 64 gebildete Drehachse 39, um die sich auch der Steuerarm 27 bewegt. Diese rotatorische Bewegung ergibt sich aufgrund der entsprechenden Formgestaltung der zweiten Führungskulisse 60 und der dritten Führungskulisse 63. So ist nämlich die zweite Führungskulisse 60 in einem Kurvenbereich 65 derart gekrümmt, dass die Bewegung des Verriegelungselements 25 von der translatorischen Bewegung in eine Rotationsbewegung übergehen kann. Diese Rotationsbewegung erfolgt dann um die Drehachse 39, um die sich auch der Steuerarm 27 bewegt.

Wie sich in der Figur 3 darüber hinaus erkennen lässt, ist die entriegelte Stellung des Verriegelungselements 25 durch die Feder 29 gesichert, die den Bolzen 43 am oberen Ende 55 der (ersten) Führungskulisse 45 hält. Damit wird das Verriegelungselement 25 in der entriegelten Stellung gehalten, so dass der Fahrgast beim Umklappen der Rückenlehne die Betätigungseinrichtung 50 nicht "betätigt" halten muss.

Im Übrigen lässt sich in der Figur 3 erkennen, dass die Rastnase 35 aufgrund der Translationsbewegung und der anschließenden Rotationsbewegung von dem Arretierbolzen 37 getrennt wurde, so dass nunmehr eine Schwenk- bzw. Verschiebebewegung der Rückenlehne 7 nach vorn erfolgen kann.

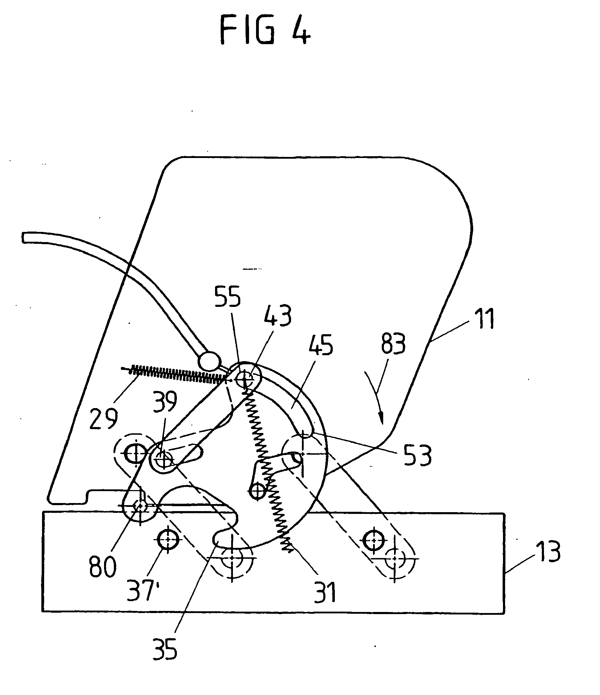

In der Figur 4 ist die Rückenlehne 7 dargestellt, nachdem sie in Fahrtrichtung nach vorn über die Hebelanordnung 17 verschoben wurde. Man erkennt in der Figur 4 eine einen Auslöseanschlag bildende Auslösenase 80 des Verriegelungselements 25, die auf dem Befestigungsträger 13 des Sitzuntergestells 5 auftrifft, bevor die Rückenlehne 7 ihre endgültige Position auf dem Befestigungsträger 13 erreicht. Die Auslösenase 80 des Verriegelungselements 25 ist dabei so angebracht, dass sie bei einem Auftreffen auf dem Befestigungsträger 13 das Verriegelungselement 25 in eine Rotationsbewegung um die Drehachse 39 des Streuerarms 27 zwingt. Das Verriegelungselement 25 wird daher entlang dem Pfeil 83 nach unten geschwenkt, wodurch die Feder 29 auseinander gezogen wird. Dabei bewegt sich dann auch der Bolzen 43 in der Führungskulisse 45 in Richtung auf das untere Ende 53 der Führungskulisse 45 zu. Sobald der Bolzen 43 eine Zwischenposition erreicht, die ungefähr zwischen dem unteren Ende 53 der Führungskulisse 45 und dem oberen Ende 55 der Führungskulisse 45 liegt, überwiegt die Federkraft der Feder 31 gegenüber der Federkraft der Feder 29, so dass der Führungsbolzen 43 zum unteren Ende 53 der Führungskulisse 45 gezogen und dort arretiert wird. Dabei wird dann auch der Steuerarm 27 in seine waagerechte bzw. horizontale Position zurückgedreht und das Verriegelungselement 25 im Rahmen einer translatorischen Bewegung in Fahrtrichtung nach vorn gedrückt. Durch diese translatorische Bewegung wird die Rastnase 35 des Verriegelungselements 25 ebenfalls in Fahrtrichtung nach vorn bewegt, so dass die Rastnase 35 an dem weiteren Arretierbolzen 37' des Befestigungsträgers 13 des Sitzuntergestells anschlägt und die Rückenlehne 7 fest an dem Befestigungsträger 13 verriegelt.

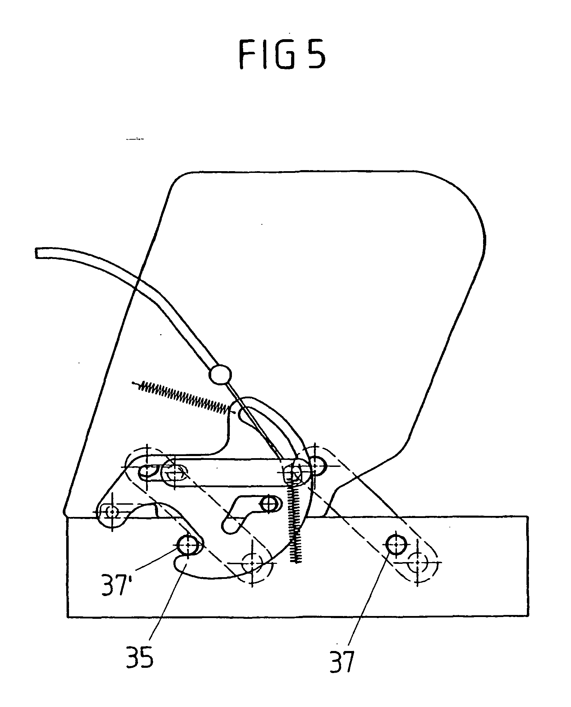

Die in der Figur 5 dargestellte Endlage des Verriegelungselements 25 entspricht damit der in der Figur 2 dargestellten Stellung des Verriegelungselements 25, so dass diesbezüglich auf die obigen Ausführungen verwiesen werden kann.

Zusammengefasst lässt sich also feststellen, dass durch die in den Figuren 2 bis 5 dargestellte Formgestaltung der drei Führungskulissen 45, 60 und 63 eine Bewegung des Verriegelungselements 25 erzwungen wird, die sich aus einer translatorischen Bewegung und einer rotatorischen Bewegung zusammensetzt. Zum Entriegeln des Verriegelungselements 25 wird dieses zunächst in eine translatorische Bewegung entgegen der Fahrtrichtung bzw. der Sitzlängsrichtung L bewegt; erst daran anschließend wird das Verriegelungselement 25 gedreht bzw. in eine rotatorische Bewegung gebracht, durch die es dann endgültig in den entriegelten Zustand gebracht wird.

Beim Übergang von dem entriegelten Zustand in den verriegelten Zustand ist dabei die Bewegung des Verriegelungselementes 25 entsprechend umgekehrt: So wird bei einem Auftreffen der Auslösenase 80 auf dem Befestigungsträger 13 das Verriegelungselement 25 zunächst in eine Rotationsbewegung gebracht, an der sich dann die translatorische Bewegung anschließt. Nach Abschluss der translatorischen Bewegung verriegelt dann die Rastnase 35 die Rückenlehne 7 an dem Befestigungsträger 13.

Die beiden Federn 29 und 31 bewirken dabei, dass die Verriegelungseinrichtung 23 sowohl in der entriegelten Stellung als auch in der verriegelten Stellung stets sicher gehalten wird, so dass Zwischenzustände zwischen dem entriegelten Zustand und dem verriegelten Zustand verhindert werden.

Im Übrigen lässt sich in den Figuren 2 bis 5 erkennen, dass die Ausgestaltung des Verriegelungselements 25 derart gewählt ist, dass selbst bei hohen Kräften, wie sie bei Autounfällen auftreten, das Verriegelungselement 25 nicht aus einer verriegelten Position gebracht werden kann, weil nämlich die entsprechenden Kräfte durch die "sekundären Verriegelungselemente" aufgenommen werden. Die bereits oben erwähnten "sekundären Verriegelungselemente" werden dabei durch den Steuerarm 27, die beiden Hilfsbolzen 64 und 64', die Formgebung der drei Führungskulissen 45, 60 und 63 sowie durch die beiden Federn 29 und 31 gebildet.

Aufgrund des Eigengewichts der Rückenlehne 7 wird bei dem Fahrzeugsitz gemäß den Figuren 2 bis 5 die Verriegelung des Verriegelungselements 25 automatisch bewirkt; befindet sich die Rückenlehne 7 nämlich in einer Zwischenposition, so wird sie aufgrund der Gewichtskraft nach unten in eine ihrer beiden Endpositionen gezogen. Kurz vor Erreichen der jeweiligen Endposition bzw. Arretierposition löst die Auslösenase 80 die rotatorische Bewegung und damit einhergehend die Verriegelung des Verriegelungselements 25 aus.

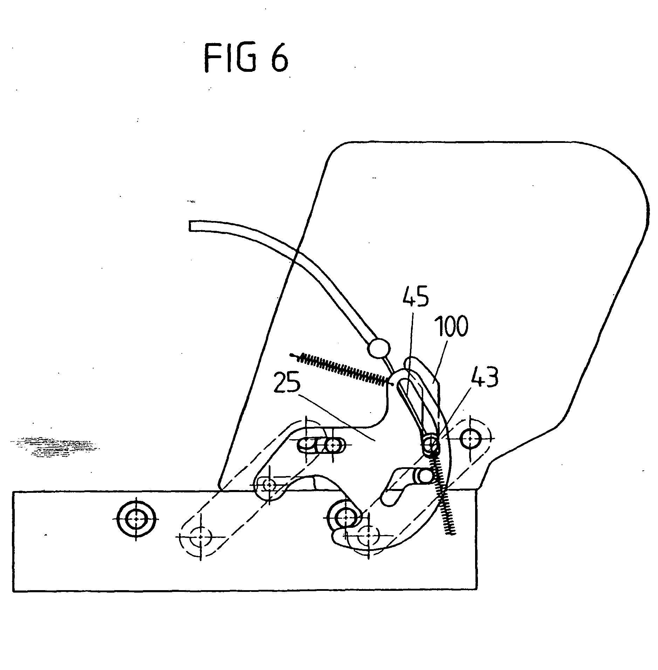

In den Figuren 6 bis 10 ist ein weiteres Ausführungsbeispiel für die Verriegelungseinrichtung 23 gemäß der Figur 1 dargestellt. Die Verriegelungseinrichtung 23 gemäß den Figuren 6 bis 10 ist weitgehend mit der Verriegelungseinrichtung gemäß den Figuren 2 bis 5 identisch. Unterschiede bestehen lediglich darin, dass bei dem zweiten Ausführungsbeispiel gemäß den Figuren 6 bis 10 kein Steuerarm 27 für den Bolzen 43 vorhanden ist. Die Führung des Bolzens 43 in der Führungskulisse 45 erfolgt bei dem zweiten Ausführungsbeispiel durch eine vierte Führungskulisse 100, die mit der ersten Führungskulisse 45 zusammenwirkt. So greift nämlich der Bolzen 43 in beide Führungskulissen 45 und 100 ein, so dass ein Verdrehen bzw. ein Verschieben des Verriegelungselementes 25 lediglich entlang einer Bahn möglich ist, die sowohl dem Verlauf der ersten Führungskulisse 45 als auch dem Verlauf der vierten Führungskulisse 100 entspricht. Selbstverständlich sind darüber hinaus auch die zweite und die dritte Führungskulisse 60 und 63 für die Bewegung des Verriegelungselements 25 maßgeblich.

Abgesehen davon, dass der Steuerarm 27 gemäß dem ersten Ausführungsbeispiel durch die vierte Steuerkulisse 100 bei dem zweiten Ausführungsbeispiel ersetzt ist, entspricht sich die Funktionsweise der beiden Ausführungsbeispiele vollständig, so dass bezüglich der Funktionsweise auf die obigen Ausführungen verwiesen werden kann.

Zur Erläuterung sei lediglich darauf hingewiesen, dass die Figur 6 die Rückenlehne 7 in der in Fahrtrichtung gesehen hinteren Position im verriegelten Zustand zeigt.

Bei der Darstellung gemäß der Figur 7 ist das Verriegelungselement 25 translatorisch nach hinten ausgelenkt; eine Rotationsbewegung ist noch nicht erfolgt. Dementsprechend befindet sich bei der Darstellung gemäß der Figur 7 der Bolzen 43 in einer Position, die zwischen den beiden Enden 105 und 110 der vierten Führungskulisse 100 liegt. Die beiden Federn 29 und 31 sind entsprechend gespannt.

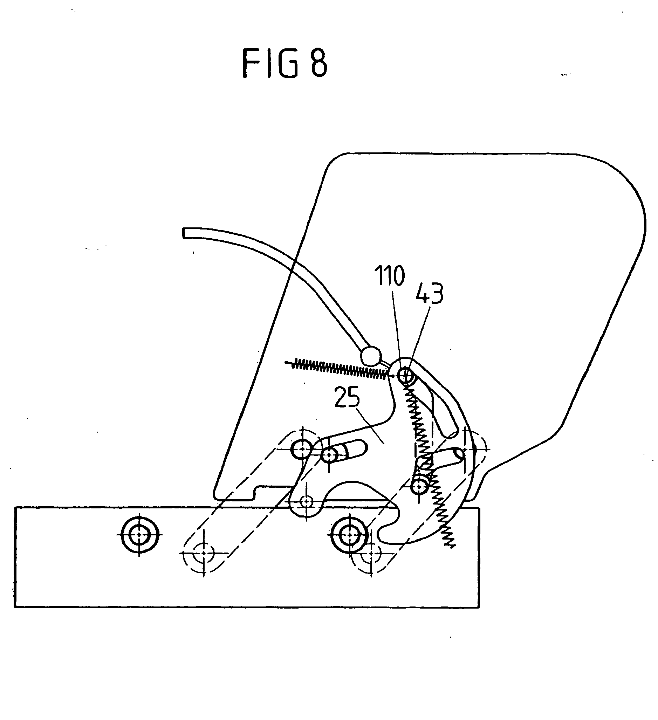

Bei der Darstellung gemäß der Figur 8 ist anschließend an die in der Figur 7 dargestellte translatorische Bewegung des Verriegelungselementes 25 bereits die rotatorische Bewegung des Verriegelungselementes 25 erfolgt. Der Bolzen 43 hat das obere Ende 55 der ersten Führungskulisse 45 sowie auch das obere Ende 110 der vierten Führungskulisse 100 erreicht und ist somit aufgrund der Federkraft der Feder 29 in der entriegelten Stellung fixiert.

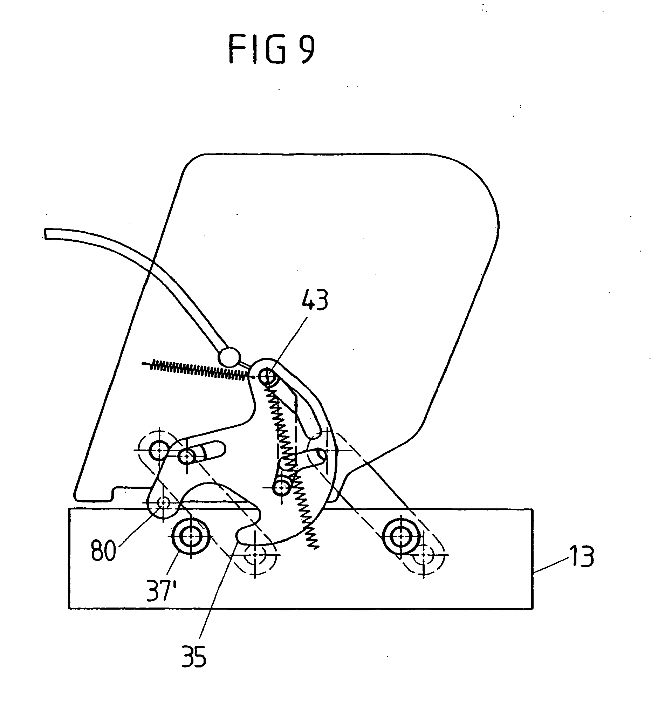

Aufgrund der Entriegelung des Verriegelungselementes 25 kann nun die Rückenlehne 7 von ihrer hinteren Stellung in die vordere Stellung bewegt werden. Den Abschluss dieses Bewegungsvorganges zeigt die Figur 9, und zwar zu einem Zeitpunkt, zu dem die Auslösenase 80 auf dem Befestigungsträger 13 des Sitzuntergestells auftrifft. Die Auslösenase 80 bewirkt wiederum eine zunächst rotatorische Bewegung des Verriegelungselementes 25, woran sich dann aufgrund der Federkräfte der beiden Federn 29 und 31 sowie aufgrund der entsprechenden Bewegung des Bolzens 43 in der ersten Führungskulisse 45 und der vierten Führungskulisse 100 eine translatorische Bewegung des Verriegelungselementes 25 anschließt. Nach Abschluss der translatorischen Bewegung des Verriegelungselementes 25 erreicht dann die Rastnase 35 den weiteren Arretierbolzen 37', so dass das Verriegelungselement 25 wiederum verriegelt ist.

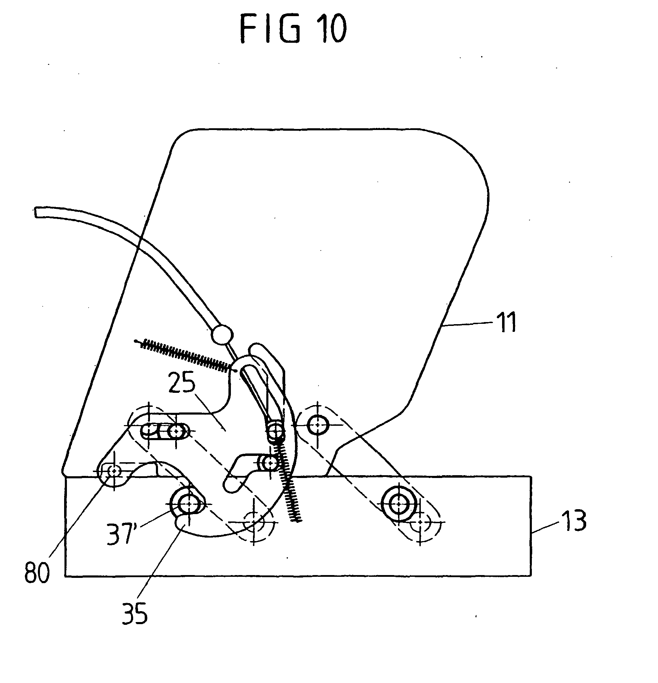

Im Ergebnis hat damit bei der Darstellung gemäß der Figur 10 die Rückenlehne 7 ihre in Fahrtrichtung gesehen vordere Position erreicht und ist dort sicher verriegelt. Aufgrund der Ausgestaltung der vier Führungskulissen und aufgrund der beiden Federn 29 und 31 ist diese Verriegelung derart stabil, dass es auch im Falle eines Fahrzeugunfalls -zu keiner Bewegung bzw. Verschiebung der Rückenlehne 7 kommen kann.

Bei den beiden Ausführungsbeispielen gemäß den Figuren 2 bis 10 wird der Bolzen 43 durch den Bowdenzug 57 angesteuert. Statt einer Ansteuerung durch einen Bowdenzug kann auch eine Ansteuerung durch ein beliebiges anderes Seil erfolgen. Der Bowdenzug bzw. das Seil kann dabei manuell oder durch einen Motor betätigt werden.

Bei dem ersten Ausführungsbeispiel gemäß den Figuren 2 bis 5 kann dabei auch völlig auf den Bowdenzug verzichtet werden, weil nämlich ein Umsteuern bzw. ein Bewegen des Bolzens 43 auch über den Steuerarm 27 erzwungen werden kann. So kann nämlich beispielsweise ein Antriebsmotor an der Drehachse 39 vorgesehen sein, mit dem der Steuerarm 27 ausgelenkt wird, wodurch sich dann die entsprechende Bewegung des Bolzens 43 in der Führungskulisse 45 ergibt.

Im Übrigen können die in den Figuren dargestellten Federn 29 und 31 auch durch Drehfedern ersetzt werden; wesentlich ist nur, dass jeweils eine entsprechende Kraftwirkung auf das Verriegelungselement 25 ausgeübt wird.

**Bezugszeichenliste**

| | |
|---|---|
| 6 | Sitzpolster |
| 7 | Rückenlehne |
| 9 | Rückenpolster |
| 10 | Kopfstütze |
| 11 | Befestigungsplatte |
| 13 | Befestigungsträger |
| 15 | Verschiebeeinrichtung |
| 17 | Hebelanordnung |
| 19,21 | Verstellhebel |
| 23 | Verriegelungseinrichtung |
| 25 | Verriegelungselement |
| 27 | Steuerarm |
| 29,31 | Federn |
| 33 | Überführungselement |
| 35 | Rastnase |
| 37, 37' | Arretierbolzen |
| 39 | Drehachse |
| 41 | Ein Ende des Steuerarms |
| 43 | Bolzen |
| 45 | Führungskulisse |
| 47 | Anderes Ende des Steuerarms |
| 50 | Betätigungseinrichtung |
| 53 | Unteres Ende der Führungskulisse 45 |
| 55 | Oberes Ende der Führungskulisse 45 |
| 57 | Bowdenzug |
| 60 | Zweite Führungskulisse |
| 63 | Dritte Führungskulisse |
| 64,64' | Hilfsbolzen |
| 65 | Kurvenbereich |
| 80 | Auslösenase |
| 83 | Pfeil |
| 100 | Vierte Führungskulisse |
| 105 | Unteres Ende der vierten Führungskulisse |
| 110 | Oberes Ende der vierten Führungskulisse |
| F | Sitzfläche |
| L | Sitzlängsrichtung |
| X, Z | Fahrzeugachsen |

## Patentansprüche

1. Kraftfahrzeugsitz oder Kraftfahrzeugsitzbank mit
- einem Sitzuntergestell, das eine Sitzfläche (F) für einen Fahrzeuginsassen definiert und sich in einer Sitzlängsrichtung (L) erstreckt,
- einer Rückenlehne (7),
- einer Verschiebeeinrichtung (15), mittels derer sich die Rückenlehne (7) relativ zum Sitzuntergestell von einer ersten Arretierposition in zumindest eine zweite Arretierposition in oder entgegen der Sitzlängsrichtung (L) verschieben lässt, und
- einer Verriegelungseinrichtung (23), die im verriegelten Zustand die Rückenlehne (7) in der jeweiligen Arretierposition verriegelt und im entriegelten Zustand eine Verschiebebewegung der Rückenlehne (7) erlaubt,
- wobei die Verriegelungseinrichtung (23) derart ausgestaltet ist, dass ein Überführungselement (33) deren entriegelten Zustand hält und die Verriegelungseinrichtung (23) dann selbsttätig vom entriegelten in den verriegelten Zustand übergeht, wenn die Rückenlehne (7) bei einem Verschieben eine der mindestens zwei Arretierpositionen erreicht,
**dadurch gekennzeichnet,**
- **dass** die Verriegelungseinrichtung (23) ein Verriegelungselement (25) aufweist, das derart angeordnet und ausgestaltet ist, dass es zum Überführen der Verriegelungseinrichtung (23) von dem verriegelten Zustand in den entriegelten Zustand - oder umgekehrt - translatorisch und rotatorisch bewegt werden muss, und
- **dass** das Verriegelungselement (25) einen Auslöseanschlag (80) aufweist, der - bei Annäherung der Rückenlehne (7) an eine der Arretierpositionen - an einem am Sitzuntergestell angeordneten Anschlag anschlägt und dabei den Übergang von dem entriegelten Zustand in den verriegelten Zustand auslöst.

2. Kraftfahrzeugsitz oder Kraftfahrzeugsitzbank nach Anspruch 1, **dadurch gekennzeichnet, dass** das Verriegelungselement (25) zumindest eine Führungskulisse (45) aufweist, die den zum Entriegeln und Verriegeln erforderlichen Bewegungsablauf festlegt und in der ein Bolzen (43) derart geführt wird, dass eine selbsttätige Entriegelung des verriegelten Verriegelungselements (25) durch im Unfallfall einwirkende äußere Kräfte verhindert wird.

3. Kraftfahrzeugsitz oder Kraftfahrzeugsitzbank nach Anspruch 2, **dadurch gekennzeichnet, dass** der Bolzen (43) in der Führungskulisse (45) derart geführt wird, dass er zum Entriegeln des verriegelten Verriegelungselements (25) eine nach oben gerichtete Bewegung ausführen muss.

4. Kraftfahrzeugsitz oder Kraftfahrzeugsitzbank nach Anspruch 3, **dadurch gekennzeichnet, dass** der Bolzen (43) zum Entriegeln des verriegelten Verriegelungselements (25) von einem unteren Ende (53) in ein oberes Ende (55) der Führungskulisse (45) überführt wird..

5. Kraftfahrzeugsitz oder Kraftfahrzeugsitzbank nach einem der Ansprüche 2 bis 4, **dadurch gekennzeichnet, dass** der Bolzen (43) an einem Ende (41) eines Steuerarms (27) befestigt ist, dessen anderes Ende (47) an einer an der Rückenlehne (7) angeordneten Drehachse (39) drehbar befestigt ist.

6. Kraftfahrzeugsitz oder Kraftfahrzeugsitzbank nach einem der Ansprüche 2 bis 4, **dadurch gekennzeichnet, dass** der Bolzen (43) in einer mit der Rückenlehne (7) starr verbundenen Kulisse (100) geführt wird.

7. Kraftfahrzeugsitz oder Kraftfahrzeugsitzbank nach einem der vorangehenden Ansprüche, **dadurch gekennzeichnet, dass** die Verschiebeeinrichtung (15) eine Hebelanordnung (17) aufweist, mittels derer sich die Rückenlehne (7) bezüglich des Sitzuntergestells verschieben lässt.

8. Kraftfahrzeugsitz oder Kraftfahrzeugsitzbank nach Anspruch 7, **dadurch gekennzeichnet, dass** die Hebelanordnung (17) durch zwei voneinander beabstandete Verstellhebel (19, 21) gebildet wird, die einerseits jeweils an der Rückenlehne (7) und andererseits an dem Sitzuntergestell angelenkt sind.

9. Kraftfahrzeugsitz oder Kraftfahrzeugsitzbank nach Anspruch 8, **dadurch gekennzeichnet, dass** die Verstellhebel (19, 21) parallel zueinander verlaufen.

10. Kraftfahrzeugsitz oder Kraftfahrzeugsitzbank nach Anspruch 8, **dadurch gekennzeichnet, dass** die Verstellhebel derart bemessen und zueinander angeordnet sind, dass die Rückenlehne im nach vorne geschobenen Zustand eine steilere Position einnimmt als im nach hinten geschobenen Zustand.

11. Kraftfahrzeugsitz oder Kraftfahrzeugsitzbank nach einem der vorangehenden Ansprüche, **dadurch gekennzeichnet, dass** das Verriegelungselement (25) zum Entriegeln zunächst translatorisch und anschließend rotatorisch bewegt werden muss.

12. Kraftfahrzeugsitz oder Kraftfahrzeugsitzbank nach einem der vorangehenden Ansprüche, **dadurch gekennzeichnet, dass** zumindest zwei Hilfsbolzen (64, 64') in jeweils eine Führungskulisse (60,63) des Verriegelungselements (25) eingreifen und die translatorische Bewegung des Verriegelungselements (25) erzwingen.

13. Kraftfahrzeugsitz oder Kraftfahrzeugsitzbank nach Anspruch 12, **dadurch gekennzeichnet, dass** die zumindest zwei Hilfsbolzen (64, 64') fest an der Rückenlehne (7) befestigt sind.

14. Kraftfahrzeugsitz oder Kraftfahrzeugsitzbank nach einem der vorangehenden Ansprüche, **dadurch gekennzeichnet, dass** die Verriegelungseinrichtung (23) ein Überführungselement (33) aufweist, dass undefinierte Zwischenzustände des Verriegelungselements (25) zwischen dem verriegelten und dem entriegelten Zustand unterbindet.

15. Kraftfahrzeugsitz oder Kraftfahrzeugsitzbank nach Anspruch 14, **dadurch gekennzeichnet, dass** das Überführungselement (33) zumindest ein elastisches Element aufweist.

16. Kraftfahrzeugsitz oder Kraftfahrzeugsitzbank nach Anspruch 15, **dadurch gekennzeichnet, dass** das mindestens eine elastische Element mindestens eine Feder (29, 31) aufweist.

17. Kraftfahrzeugsitz oder Kraftfahrzeugsitzbank nach Anspruch 15 oder 16, **dadurch gekennzeichnet, dass** das Überführungselement (33) zumindest zwei Federn (29, 31) aufweist, von denen die eine (31) das Verriegelungselement (25) im verriegelten Zustand fixiert und die andere Feder (29) das Verriegelungselement (25) im entriegelten Zustand hält.

18. Kraftfahrzeugsitz oder Kraftfahrzeugsitzbank nach einem der vorangehenden Ansprüche, **dadurch gekennzeichnet, dass** das Verriegelungselement (25) eine Rastnase (35) aufweist, die im verriegelten Zustand an jeweils einem am Sitzuntergestell angeordneten Arretierbolzen (37, 37') anliegt.

19. Kraftfahrzeugsitz oder Kraftfahrzeugsitzbank nach einem der vorangehenden Ansprüche, **dadurch gekennzeichnet, dass** der Auslöseanschlag (80) derart an dem Verriegelungselement (25) angeordnet ist, dass er - bei Annäherung der Rückenlehne (7) an eine der Arretierpositionen - an einem am Sitzuntergestell angeordneten Anschlag anschlägt und eine Rotationsbewegung des Verriegelungselements (25) auslöst, woraufhin das Überführungselement (33) das Verriegelungselement (25) vom entriegelten Zustand in den verriegelten Zustand überführt .

20. Kraftfahrzeugsitz oder Kraftfahrzeugsitzbank nach einem der vorangehenden Ansprüche, **dadurch gekennzeichnet, dass** die Verriegelungseinrichtung (23) eine Betätigungseinrichtung (50) aufweist, durch die das Verriegelungselement (25) vom verriegelten Zustand in den entriegelten Zustand überführbar ist.

21. Kraftfahrzeugsitz oder Kraftfahrzeugsitzbank nach Anspruch 20, **dadurch gekennzeichnet, dass** der Bolzen (43) Teil der Betätigungseinrichtung (50) ist.

22. Kraftfahrzeugsitz oder Kraftfahrzeugsitzbank nach einem der Ansprüche 20 bis 21, **dadurch gekennzeichnet, dass** die Betätigungseinrichtung (50) über ein Seil, insbesondere einen Bowdenzug (57), ansteuerbar ist.

23. Kraftfahrzeugsitz oder Kraftfahrzeugsitzbank nach einem der Ansprüche 20 bis 22, **dadurch gekennzeichnet, dass** die Betätigungseinrichtung (50) über einen manuellen Antrieb manuell oder über einen Motorantrieb betätigbar ist.

24. Kraftfahrzeugsitz oder Kraftfahrzeugsitzbank nach einem der vorangehenden Ansprüche, **dadurch gekennzeichnet, dass** die Rückenlehne (7) schwenkbar gelagert ist.

25. Kraftfahrzeugsitz oder Kraftfahrzeugsitzbank nach Anspruch 24, **dadurch gekennzeichnet, dass** die Rückenlehne (7) schwenkbar am Sitzuntergestell gelagert ist.

26. Kraftfahrzeugsitz oder Kraftfahrzeugsitzbank nach einem der vorhergehenden Ansprüche, **dadurch gekennzeichnet, dass** die Sitzfläche (F) durch ein auf dem Sitzuntergestell angeordnetes Sitzpolster (6) gebildet wird.

## Claims

1. Motor vehicle seat or motor vehicle seat bench with
- a seat base which defines a seat surface (F) for a vehicle occupant and extends in a longitudinal direction (L) of the seat,
- a backrest (7),
- a displacement device (15) by means of which the backrest (7) can be moved relative to the seat base in or against the longitudinal direction (L) of the seat from a first locking position into at least a second locking position, and
- a locking device (23) which in the locked state locks the backrest (7) in the relevant locking position and in the unlocked state permits a displacement movement of the backrest (7),
- wherein the locking device (23) is designed such that a transfer element (33) holds its unlocked state and the locking device (23) automatically passes from the unlocked to the locked state as soon as the backrest (7) during displacement reaches one of the at least two locking positions,
**characterized in that**
- the locking device (23) comprises a locking element (25) which is arranged and configured such that it must be moved in translation and rotation to transfer the locking device (23) from the locked state to the unlocked state - or vice versa -, and
- the locking element (25) comprises a release stop (80) which - as the backrest (7) approaches one of the locking positions - stops against a stop mounted on the seat base and thus triggers the transfer from the unlocked state into the locked state.

2. Motor vehicle seat or motor vehicle seat bench according to claim 1, **characterised in that** the locking element (25) comprises at least one guide slide (45, 60, 63) which determines the movement sequence required for unlocking and locking and in which a bolt (43) is guided such that an automatic unlocking of the locked locking element (25) is prevented by external forces impacting during an accident.

3. Motor vehicle seat or motor vehicle seat bench according to claim 2, **characterised in that** the bolt (43) is guided in the guide slide (45) such that it must perform a movement directed upwardly for unlocking the locked locking element (25).

4. Motor vehicle seat or motor vehicle seat bench according to claim 3, **characterised in that** the bolt (43) is transferred from a lower end (53) to an upper end (55) of the guide slide (45) for unlocking the locked locking element (25).

5. Motor vehicle seat or motor vehicle seat bench according to one of claims 2 to 4, **characterised in that** the bolt (43) is fastened to an end (41) of a control arm (27) whose other end (47) is fixed rotatably on a rotational axis (39) mounted on the backrest (7).

6. Motor vehicle seat or motor vehicle seat bench according to one of claims 2 to 4, **characterised in that** the bolt (43) is guided in a slide guide (100) rigidly connected to the backrest (7).

7. Motor vehicle seat or motor vehicle seat bench according to one of the preceding claims, **characterised in that** the displacement device (15) comprises a lever assembly (17) by means of which the backrest (7) can be moved relative to the seat base.

8. Motor vehicle seat or motor vehicle seat bench according to claim 7, **characterised in that** the lever assembly (17) is formed by two adjusting levers (19, 21) which are spaced apart from each other and are each attached on one side to the backrest (7) and on the other side to the seat base.

9. Motor vehicle seat or motor vehicle seat bench according to claim 8, **characterised in that** the adjusting levers (19, 21) run parallel to each other.

10. Motor vehicle seat or motor vehicle seat bench according to claim 8, **characterised in that** the adjusting levers are dimensioned and arranged relative to each other such that the backrest in the pushed-forward state occupies a steeper position than in the pushed-backward state.

11. Motor vehicle seat or motor vehicle seat bench according to one of the preceding claims, **characterised in that** the locking element (25) for unlocking must first be moved in translation and then in rotation.

12. Motor vehicle seat or motor vehicle seat bench according to one of the preceding claims, **characterised in that** at least two auxiliary bolts (64, 64') engage in each one guide slide (60, 63) of the locking element (25) and force the translational movement of the locking element (25).

13. Motor vehicle seat or motor vehicle seat bench according to claim 12, **characterised in that** the at least two auxiliary bolts (64, 64') are fixed rigidly on the backrest (7).

14. Motor vehicle seat or motor vehicle seat bench according to one of the preceding claims, **characterised in that** the locking device (23) comprises a transfer element (33) which prevents undefined intermediate states of the locking element (25) between the locked and unlocked state.

15. Motor vehicle seat or motor vehicle seat bench according to claim 14, **characterised in that** the transfer element (33) comprises at lest one elastic element.

16. Motor vehicle seat or motor vehicle seat bench according to claim 15, **characterised in that** the at least one elastic element comprises at least one spring (29, 31).

17. Motor vehicle seat or motor vehicle seat bench according to claim 15 or 16, **characterised in that** the transfer element (33) comprises at least two springs (29, 31), of which one (31) fixes the locking element (25) in the locked state and the other spring (29) holds the locking element (25) in the unlocked state.

18. Motor vehicle seat or motor vehicle seat bench according to one of the preceding claims, **characterised in that** the locking element (25) comprises a detent nose (35) which in the locked state in each case bears against a locking bolt (37, 37') mounted on the seat base.

19. Motor vehicle seat or motor vehicle seat bench according to one of the preceding claims, **characterised in that** the release stop (80) is mounted on the locking element (25) such that - as the backrest (7) approaches one of the locking positions - it stops against a stop mounted on the seat base and triggers a rotational movement of the locking element (25), whereupon the transfer element (33) transfers the locking element (25) from the unlocked state into the locked state.

20. Motor vehicle seat or motor vehicle seat bench according to one of the preceding claims, **characterised in that** the locking device (23) comprises an actuating device (50) through which the locking element (25) can be moved from the locked state into the unlocked state.

21. Motor vehicle seat or motor vehicle seat bench according to claim 20, **characterised in that** the bolt (43) is part of the actuating device (50).

22. Motor vehicle seat or motor vehicle seat bench according to one of claims 20 to 21, **characterised in that** the actuating device (50) is controllable through a cable, more particularly a Bowden cable (57).

23. Motor vehicle seat or motor vehicle seat bench according to one of claims 20 to 22, **characterised in that** the actuating device (50) can be actuated manually through a manual drive or through a motor drive.

24. Motor vehicle seat or motor vehicle seat bench according to one of the preceding claims, **characterised in that** the backrest (7) is mounted pivotally.

25. Motor vehicle seat or motor vehicle seat bench according to claim 24, **characterised in that** the backrest (7) is mounted pivotally on the seat base.

26. Motor vehicle seat or motor vehicle seat bench according to one of the preceding claims, **characterised in that** the seat surface (F) is formed by a seat cushion (6) mounted on the seat base.

## Revendications

1. Siège ou banquette de véhicule automobile, comprenant :
- une ossature de siège, qui définit une surface d'assise (F) pour un passager du véhicule et qui s'étend dans une direction longitudinale (L) du siège,
- un dossier (7),
- un dispositif de déplacement (15), au moyen duquel le dossier (7) peut être déplacé par rapport à l'ossature de siège depuis une première position d'arrêt jusque dans au moins une seconde position d'arrêt, dans la direction longitudinale du siège (L) ou en sens opposé, et
- un système de verrouillage (23) qui, dans l'état verrouillé, verrouille le dossier (7) dans la position d'arrêt respective et qui, dans l'état déverrouillé, permet un mouvement de déplacement du dossier (7),
- dans lequel le système de verrouillage (23) est conçu de telle façon qu'un élément de transfert (33) maintient son état déverrouillé, et le système de verrouillage (23) passe alors automatiquement de l'état déverrouillé à l'état verrouillé quand le dossier (7) atteint l'une desdites au moins deux positions d'arrêt lors d'un déplacement,
**caractérisé en ce que**
- le système de verrouillage (23) comprend un élément de verrouillage (25) qui est agencé et conçu de telle manière que, pour transférer le système de verrouillage (23) de l'état verrouillé vers l'état déverrouillé - ou inversement- il doit être déplacé en translation et en rotation, et
- l'élément de verrouillage (25) comprend une butée de déclenchement (80) qui, lors du rapprochement du dossier (7) vers l'une des positions d'arrêt, vient buter contre une butée agencée sur l'ossature de siège et déclenche alors la transition de l'état déverrouillé vers l'état verrouillé.

2. Siège ou banquette de véhicule automobile selon la revendication 1,
**caractérisé en ce que** l'élément de verrouillage (25) comprend au moins une glissière de guidage (45) qui détermine le déroulement du mouvement nécessaire pour le déverrouillage et pour le verrouillage, et dans laquelle un goujon (43) peut être guidé de telle manière qu'un déverrouillage spontané de l'élément de verrouillage verrouillé (25) sous des forces extérieures agissant en cas d'accident est empêché.

3. Siège ou banquette de véhicule automobile selon la revendication 2,
**caractérisé en ce que** le goujon (43) est guidé dans la glissière de guidage (45) de telle manière que, pour déverrouiller l'élément de verrouillage verrouillé (25), il doit exécuter un mouvement dirigé vers le haut.

4. Siège ou banquette de véhicule automobile selon la revendication 3,
**caractérisé en ce que** le goujon (43) est passé d'une extrémité inférieure (53) jusqu'à une extrémité supérieure (55) de la glissière de guidage (45) pour le déverrouillage de l'élément de verrouillage verrouillé (25).

5. Siège ou banquette de véhicule automobile selon l'une des revendications 2 à 4, **caractérisé en ce que** le goujon (43) est fixé à une extrémité (41) d'un bras de commande (27), dont l'autre extrémité (47) est fixée en rotation sur un axe de rotation (39) agencé sur le dossier (7).

6. Siège ou banquette de véhicule automobile selon l'une des revendications 2 à 4, **caractérisé en ce que** le goujon (43) est guidé dans une glissière (100) rigidement reliée au dossier (7).

7. Siège ou banquette de véhicule automobile selon l'une des revendications précédentes, **caractérisé en ce que** le dispositif de déplacement (15) comprend un agencement à leviers (17) au moyen duquel le dossier (7) peut être déplacé par rapport à l'ossature de siège.

8. Siège ou banquette de véhicule automobile selon la revendication 7,
**caractérisé en ce que** l'agencement à leviers (17) est formé par deux leviers de réglage (19, 21) écartés l'un de l'autre, qui sont articulés respectivement d'une part sur le dossier (7) et d'autre part sur l'ossature de siège.

9. Siège ou banquette de véhicule automobile selon la revendication 8,
**caractérisé en ce que** les leviers de réglage (19, 21) s'étendent parallèlement l'un à l'autre.

10. Siège ou banquette de véhicule automobile selon la revendication 8,
**caractérisé en ce que** les leviers de réglage ont des dimensions telles et sont agencés l'un par rapport à l'autre de telle façon que le dossier occupe, dans l'état déplacé vers l'avant, une position plus raide que dans l'état déplacé vers l'arrière.

11. Siège ou banquette de véhicule automobile selon l'une des revendications précédentes, **caractérisé en ce que** l'élément de verrouillage (25) doit être déplacé, pour le déverrouillage, tout d'abord en translation et ensuite en rotation.

12. Siège ou banquette de véhicule automobile selon l'une des revendications précédentes, **caractérisé en ce qu'**au moins deux goujons auxiliaires (64, 64') s'engagent dans une glissière de guidage respective (60, 63) de l'élément de verrouillage (25) et forcent le mouvement de translation de l'élément de verrouillage (25).

13. Siège ou banquette de véhicule automobile selon la revendication 12, **caractérisé en ce que** lesdits au moins deux goujons auxiliaires (64, 64') sont fixés fermement sur le dossier (7).

14. Siège ou banquette de véhicule automobile selon l'une des revendications précédentes, **caractérisé en ce que** le système de verrouillage (23) comprend un élément de transfert (33) qui empêche des états intermédiaires indéfinis de l'élément de verrouillage (25) entre l'état verrouillé et l'état déverrouillé.

15. Siège ou banquette de véhicule automobile selon la revendication 14, **caractérisé en ce que** l'élément de transfert (33) comprend au moins un élément élastique.

16. Siège ou banquette de véhicule automobile selon la revendication 15, **caractérisé en ce que** ledit au moins un élément élastique comprend au moins un ressort (29, 31).

17. Siège ou banquette de véhicule automobile selon la revendication 15 ou 16, **caractérisé en ce que** l'élément de transfert (33) comprend au moins deux ressorts (29, 31), l'un des ressorts (31) fixant l'élément de verrouillage (25) dans l'état verrouillé et l'autre ressort (29) maintenant l'élément de verrouillage (25) dans l'état déverrouillé.

18. Siège ou banquette de véhicule automobile selon l'une des revendications précédentes, **caractérisé en ce que** l'élément de verrouillage (25) comprend un ergot d'enclenchement (35) qui, dans l'état verrouillé, s'applique respectivement sur un goujon d'arrêt (37, 37') agencé sur l'ossature de siège.

19. Siège ou banquette de véhicule automobile selon l'une des revendications précédentes, **caractérisé en ce que** la butée de déclenchement (80) est agencée sur l'élément de verrouillage (25) de telle manière que, lors d'un rapprochement du dossier (7) vers l'une des positions d'arrêt, elle vient buter sur une butée agencée sur l'ossature de siège et déclenche un mouvement de rotation de l'élément de verrouillage (25), suite à quoi l'élément de transfert (33) transfère l'élément de verrouillage (25) de l'état déverrouillé vers l'état verrouillé.

20. Siège ou banquette de véhicule automobile selon l'une des revendications précédentes,
**caractérisé en ce que** le système de verrouillage (23) comprend un moyen d'actionnement (50) grâce auquel l'élément de verrouillage (25) peut être transféré de l'état verrouillé vers l'état déverrouillé.

21. Siège ou banquette de véhicule automobile selon la revendication 20, **caractérisé en ce que** le goujon (43) fait partie du moyen d'actionnement (50).

22. Siège ou banquette de véhicule automobile selon l'une des revendications 20 à 21, **caractérisé en ce que** le moyen d'actionnement (50) peut être piloté via un câble, en particulier via un mécanisme à câble Bowden (57).

23. Siège ou banquette de véhicule automobile selon l'une des revendications 20 à 22, **caractérisé en ce que** le moyen d'actionnement (50) peut être actionné soit manuellement via un entraînement manuel soit via un entraînement motorisé.

24. Siège ou banquette de véhicule automobile selon l'une des revendications précédentes, **caractérisé en ce que** le dossier (7) est monté en pivotement.

25. Siège ou banquette de véhicule automobile selon la revendication 24, **caractérisé en ce** qui le dossier (7) est monté en pivotement sur l'ossature de siège.

26. Siège ou banquette de véhicule automobile selon l'une des revendications précédentes, **caractérisé en ce que** la surface d'assise (F) est formée par un rembourrage de siège (6) agencé sur l'ossature de siège.
